# EUROPEAN PATENT SPECIFICATION

(11) **EP 2 219 472 B1**
(45) Date of publication and mention of the grant of the patent: **03.08.2011**
(21) Application number: 08849583.3
(22) Date of filing: 13.11.2008
(51) Int. Cl.: A23L 1/22, A23L 1/226, A23G 9/32

(54) **PRODUCTION OF FOOD PRODUCTS WITH ENHANCED IN MOUTH AND MENTAL REFRESHMENT**
HERSTELLUNG VON LEBENSMITTELPRODUKTEN MIT VERBESSERTER ORALER UND MENTALER ERFRISCHUNG
PRODUCTION DE PRODUITS ALIMENTAIRES AVEC RAFRAÎCHISSEMENT EN BOUCHE ET MENTAL AMÉLIORÉ

(30) Priority: 15.11.2007 EP 07120824
(43) Date of publication of application: 25.08.2010
(73) Proprietor: Nestec S.A., 1800 Vevey (CH)
(72) Inventor: LABBE, David, Philippe, CH-1010 Lausanne (CH); LIM, Tiew, Kim, Selangor 46400 (MY); PUAUD, Max, F-60860 F- Pisseleu (FR); HUDRY, Julie, Laure, CH-1010 Lausanne (CH)
(74) Representative: Baumgartner Harris, Pauline
(86) International application number: PCT/EP2008/065468
(87) International publication number: WO 2009/063005

(56) References cited:
- EP-A- 0 220 836
- WO-A-02/094035
- WO-A-03/020869
- WO-A-03/043431
- WO-A-2005/042680
- WO-A-2006/026298
- WO-A-2007/068346
- US-A1- 2003 064 137
- US-B1- 6 214 788
- US-B1- 6 235 318
- US-B1- 6 461 653
- DATABASE WPI Week 200728 Thomson Scientific, London, GB; AN 2007-287198 XP002487687 & JP 2007 054040 A (SANEIGEN FFI KK) 8 March 2007 (2007-03-08)
- DATABASE WPI Week 200718 Thomson Scientific, London, GB; AN 2007-180588 XP002487688 & JP 2007 006732 A (SANEIGEN FFI KK) 18 January 2007 (2007-01-18)
- DATABASE WPI Week 200278 Thomson Scientific, London, GB; AN 2002-719643 XP002487689 & JP 2002 306079 A (SANEIGEN FFI KK) 22 October 2002 (2002-10-22)
- DATABASE WPI Week 200334 Thomson Scientific, London, GB; AN 2003-360950 XP002487690 & KR 2003 004 879 A (LOTTE CONFECTIONERY CO LTD) 15 January 2003 (2003-01-15)

## Description

### Field of the invention

The present invention relates to food products, in particular frozen desserts providing an enhanced refreshing sensation in terms of in mouth refreshment and mental refreshment (alertness enhancement) upon consumption and to a method for the manufacture thereof. Furthermore, the present invention relates to refreshing consumable compositions which can be used in the manufacture of said frozen desserts.

### Background of the invention

Refreshing compositions are used in a number of products such as mouthwash, toothpaste, chewing gum, candy sweet etc. The refreshing sensation is generally provided by compounds such as menthol or menthol derivatives, terpenes, carboxamide derivatives, substituted p-menthanes, etc. Some of these compounds are sometimes associated with so-called salivating compounds such as citric acid, maleic acid and lactic acid.

Cooling compounds are for instance described in US 6,359,168, US2004/0241312, US 6,214,788, EP 1122233 and US 3,917,613.

Cooling together with salivating compounds are for instance described in WO 2005/042680, WO 2007/068346, WO 03/043431, WO2006/026298 and US 6,235,318.

Although some of the above citations mention the use of cooling compounds in frozen products, there is still a need to provide frozen desserts whereby the refreshing sensation is durable such that the effect persists after consumption.

WO2005/042680 describes a process for providing a water ice product which is more refreshing and longer lasting by using anti-freeze protein in said frozen product.

### Object of the invention

The object of the invention is thus to provide a way in which the refreshing sensation (in mouth and mental refreshment) of food products, in particular frozen products upon consumption can be enhanced and persists even after consumption.

### Summary of the invention

Accordingly, the present invention relates, in a first aspect, to a food product comprising at least one salivating agent and at least one cooling agent, wherein the salivating agent and cooling agent are in a weight ratio of 1:0.06 to 1:0.2, preferably 1:0.11 to 1:0.16 and wherein the salivating agent is present in an amount of 0.28 to 0.35wt% and the cooling agent is present in an amount of 0.02 to 0.45wt%.

In a second aspect, the use of a refreshing consumable composition comprising at least one salivating agent and at least one cooling agent, wherein the salivating agent and cooling agent are in a weight ratio of 1:0.06 to 1:0.2, preferably 1:0.11 to 1:0.16 in the production of a food product, wherein the salivating agent is present in an amount of 0.28 to 0.35wt% and the cooling agent is present in an amount of 0.02 to 0.045 wt%, is provided.

A method for enhancing the refreshing sensation of a frozen dessert product comprising the steps of:
a. Adding to a frozen dessert preparation mix a refreshing consumable composition comprising at least one salivating agent in an amount of from 0.28 to 0.35wt% and at least one cooling agent in an amount of from 0.02 to 0.045%, wherein the salivating agent and cooling agent are in a weight ratio of 1:0.06 to 1:0.2, preferably 1:0.11 to 1:0.16, and
b. Processing the preparation mix obtained in step a to make a frozen dessert product, also forms part of the present invention.

### Figures

The present invention is described hereinafter with reference to some embodiments shown in the figures wherein
- Figure 1 is a statistical modelling of salivating intensity (S.I.) depending on the concentration of salivating agent (mouth watering agent) and cooling agent in the frozen product.
- Figure 2 is a statistical modelling of sweetness intensity (Sw.I.) depending on the concentration of salivating agent (mouth watering agent) and cooling agent in the frozen product.
- Figure 3 is a statistical modelling of coldness intensity (C.I.) depending on the concentration of salivating agent (mouth watering agent) and cooling agent in the frozen product.
- Figure 4 shows the salivating panel mean score for nine water ice trials.
- Figure 5 shows the sweetness panel mean score for nine water ice trials.
- Figure 6 compares the amount of saliva produced before and after consumption of a glass of water, a reference water ice, and a water ice according to the present invention.
- Figure 7 compares the saliva friction coefficient before and after consumption of a glass of water, a reference water ice, and a water ice according to the present invention,
- Figure 8 shows the alpha activity as determined by electroencephalography (EEG) over time induced by each treatment (glass of water, reference water ice and water ice of the present invention),
- Figure 9 shows the subject performances after each treatment in terms of correct hit during a visual detection task using a PC.

### Detailed description of the invention

The present invention is concerned with providing food products having improved refreshing sensation upon and after consumption. The refreshment sensation is preferably in mouth and mental refreshment. In the following, food product refers to any consumable product, beverage, sweet, soup, yogurt, confectionery etc. The food product may be chilled or frozen. Preferably, the food product is a frozen dessert.

It has now been found that a food product comprising at least one salivating agent and at least one cooling agent in a weight ratio of 1:0.06 to 1:0.2, preferably 1:0.11 and 1:0.16 and wherein the salivating agent is present in an amount of 0.28 to 0.35wt% and the cooling agent is present in an amount of 0.02 to 0.045wt% achieves this object. Preferably, the food product is a frozen dessert.

By "salivating agent" is to be understood any agent that induces salivation or a salivating reflex. It may also be described as a mouth watering, mouth wetting or mouth hydrating agent.

The salivating agent used in the present invention may be selected from a mixture of compounds comprising at least one organic acid selected from the group of adipic, ascorbic, citric, fumaric, lactic, malic and tartaric acids. These compounds stimulate salivary glands and thus enhance salivary flow. Such mixtures are commercially available, for example under the name of mouth watering flavouring.

By "cooling agent" is to be understood any agent that imparts a cooling sensation to the skin and mucous membranes of the body, particularly the mouth, nose, throat and gastrointestinal tract during consumption. Cooling agents are known in the art, for example from US 7,090,832.

The cooling agent used in the present invention may be selected from menthol derivative compounds, acyclic and/or cyclic carboxamides, N-substituted paramenthane carboxamides, phosphine oxides, substituted p-menthanes, menthoxypropane, alpha-keto enamine derivatives, N-substituted p-menthane carboxamide, menthyl half acid ester derivatives, cubebol etc. Preferably, the cooling agent is a compound mixture comprising at least a menthol carboxamide compound.

The ratio of salivating agent to cooling agent is key to the solution of the present invention. Indeed it has been found that only in the specific ratio of 1:0.06 to 1:0.2 of salivation agent : cooling agent respectively, a surprising, noticeable improvement is achieved as to the refreshment sensation. Advantageously the specific ratio of 2 ingredients object of the present invention is providing a refreshing perception identified by physiological marker, while not imparting any taste or olfactory perception in the application. In the prior art, cooling sensation has often been provided by so-called cooling agents which impart a taste or olfactory perception, usually a menthol-type note, thus limiting the range of applications. The present invention obviates this problem and can be used with no restriction.

According to another embodiment of the invention, the food product may further comprise a tingling agent.

By "tingling agent" is to be understood agents which trigger a trigeminal perception. These tingling agents may be selected from a plethora of compounds (plant extracts or synthetic compounds) that are known in the art to provide a tingling sensation and are used accordingly in a number of food products. Such plant extracts include extracts from pepper, onion, garlic, radish, horseradish, mustard, chilli, ginger etc. These may more precisely include, but are not limited to Jambu Oleoresin or para cress *(Spilanthes sp.)* in which the active ingredient is Spilanthol; Japanese pepper extract *(Zanthoxylum peperitum),* including the ingredients known as Saanshool-I, Saanshool-II and Sanshoamide; black pepper extract *(piper nigrum),* including the active ingredients chavicine and piperine; Echinacea extract; Northern Prickly Ash extract; and red pepper oleoresin.

The food product comprises the salivating agent in an amount of 0.28-0.35 wt%. The cooling agent is present in the frozen dessert of the invention in an amount of 0.02-0.045 wt%, more preferably 0.03-0.045 wt%, most preferably 0.032-0.045 wt%.

The food product of the invention may further comprise a mixture of malic acid and citric acid. This helps provide an organoleptic balance between sweetness and acidity in the final product.

If a tingling agent is used, it is preferably used in an amount of 0.01-0.05 wt% of the food product.

It has also been found that the presence of a mucoadhesive agent is advantageous in the present invention. Indeed, mucoadhesive polymers such as hydroxypropylmethylcellulose (HPMC) and carboxymethylcellulose (CMC) have been shown to further enhance the salivating sensation after consumption. Preferably, the mucoadhesive agent used in the present invention is CMC. When it is used in the food product of the invention, it is preferably added at an amount of about 0.05-0.5%, preferably 0.1-0.3%, most preferably about 0.1%.

The present food product may further comprise acidic fruity ingredients. These may be pieces of acidic fruits such as citrus fruits, peach, grapefruit, etc. or the juice of said fruits or pulp, or combinations thereof. These ingredients further enhance the refreshing sensation by providing specific fruity olfactory notes.

In the present invention, the food product is preferably a frozen dessert. The frozen dessert product may be selected from ice cream, sorbet, mellorine, water ice, milk shake, sherbet, milk ice, frozen yogurt etc. Preferably, it is a water ice. By "water ice" is meant an ice confection which is not aerated. Another preferred product is sorbet. By sorbet is meant aerated frozen dessert with fruit addition.

The combination of salivating agent and cooling agent may also be provided as a refreshing consumable composition. Said composition thus comprises at least one salivating agent and at least one cooling agent in a weight ratio of 1:0.06 to 1:0.2, preferably 1:0.11 to 1:0.16. The refreshing consumable composition comprises, in a further embodiment, a tingling agent. The tingling agent may be in an amount of 0.01-0.05 wt%.

Under the present invention it is thus envisaged to use such a refreshing consumable composition in the production of a food product. Preferably, it is used in the production of a frozen dessert, more preferably a water ice or sorbet.

According to another aspect, a method for enhancing the refreshing sensation of a frozen dessert product is also provided by the present invention. The method comprises in a first step the addition to a frozen dessert preparation mix of a refreshing consumable composition comprising at least one salivating agent and at least one cooling agent in a weight ratio of 1:0.06 to 1:0.2, preferably 1:0.11 to 1:0.16, wherein the salivating agent is present in an amount of from 0.28 to 0.35wt% and the cooling agent is present in an amount of from 0.02 to 0.045wt%. The refreshing consumable composition may comprise a tingling agent.

In a preferred embodiment, the refreshing consumable composition is added to the mix in an amount of 0.1-0.5 wt%, preferably 0.31-0.39 wt%.

The frozen dessert preparation mix may be a standard mix which may comprise any of sugars, milk solids-not fat, fat etc. Preferably it is a standard mix used for the manufacture of water ice.

The preparation mix obtained after addition of the refreshing consumable composition is then processed under standard processing steps known to the skilled person. This results in a frozen dessert product according to the invention. Preferably the frozen dessert product is a water ice or sorbet.

The improved refreshing sensation was confirmed by a consumer test and on physiological data.

During a test conducted with 132 consumers, a water ice comprising between 1:0.06 and 1:0.2 of salivating agent : cooling agent was highlighted as the most refreshing products among nine different ratios and even more refreshing than refreshing products from other categories such as carbonated drinks.

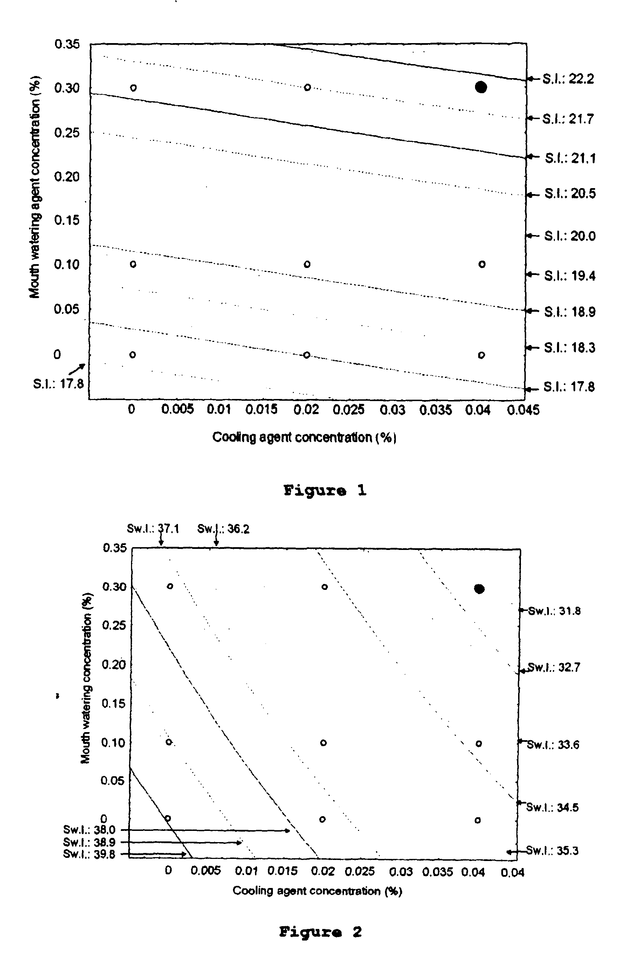

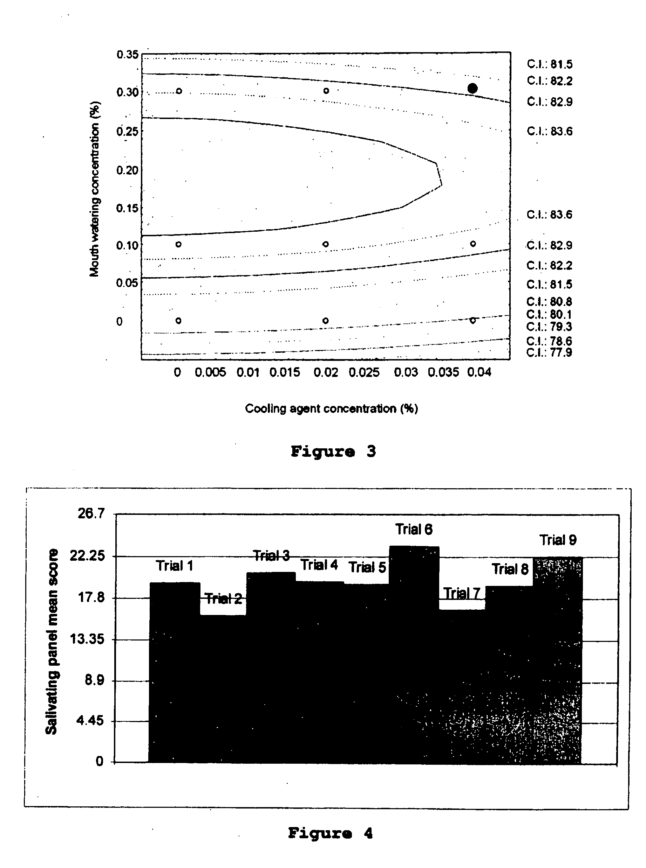

Nine water ice containing different ratio of salivating and cooling agent defined according to an experimental design (see example 1) and including a sample according to the present invention were then evaluated by a sensory panel of 12 trained subjects in terms of salivating intensity (S.I.), sweetness intensity (Sw.I.) and cold intensity (C.I.). They scored the perceived intensity of the three perceptions using a 100 cm scale with the left extremity corresponding to "Not intense at all" and the right extremity corresponding to "Very intense". S.I., Sw.I. and C.I. values represented therefore the panel mean score. 11 Based on the evaluation results, three statistical models were built to predict the optimal S.I. (figure 1), Sw. I (figure 2) and C.I. (figure 3). On each figure, 10 water ices with different ratio of cooling agent (axis X) and salivating agent (axis Y) are represented. The full dot represents the samples of the present invention. It can be seen that a specific range of mouth watering agent and cooling agent concentration was highlighted by the model to reach the optimal intensity (represented by the full dot in salivating (S.I.) in sweetness intensity (Sw.I.) (figure 2) and coldness (C.I)).

Referring to figure 2, it can be seen that at an optimal concentration of mouth watering agent and cooling agent, a low sweetness intensity (Sw.I) of 31.8 is predicted by the model. This presents the advantage of a product which is not too sweet and corresponds to the optimal sweetness according to the consumer test results.

Referring to the figure 1, 2 and 3, it can be seen that the optimal salivating intensity (S.I.), sweetness intensity (Sw.I.) and coldness intensity (C.I) are obtained for products of the invention, i.e. products having a range of mouth watering agent of 0.28 and 0.35 wt% and a range of cooling agent of 0.02 and 0.045 wt%.

Thus, as shown in figures 1 and 3, in this particular range, the highest salivating intensity (S.I.), as well as the optimal coldness intensity (C.I.) was achieved leading to a high refreshing intensity.

Not only is the refreshing sensation, through salivating, sweetness and coldness modulation achieved by the individual effects of each components, but it has been found that a synergistic effect has also been observed between said salivating and cooling agent on salivating intensity (S.I.) and sweetness intensity (Sw.I.).

Indeed, referring to figure 1, 0.25 w% of salivating agent lead to a salivating intensity (S.I.) of roughly 20.5 and the addition of 0.04 w% of cooling agent keeping the same amount of salivating agent lead to a salivating intensity of 21.2. Referring to the figure 3, the same conclusions are obtained regarding the synergistic effect of the cooling and salivating agents on the sweetness decreasing.

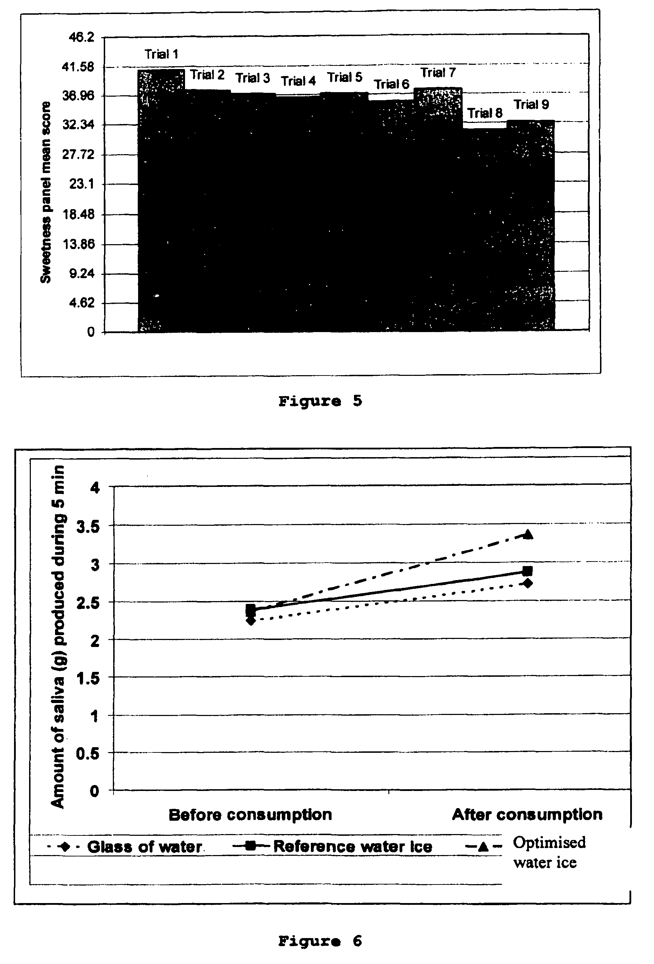

The surprising results achieved by the present invention were also confirmed by physiological data. Referring to figure 6, it can be seen that a water ice of the invention (optimised water ice) induces the highest saliva flow enhancement after consumption compared to two other products (glass of water and standard water ice). This salivary flow enhancement enhances the mouth watering and therefore the in mouth refreshing sensation.

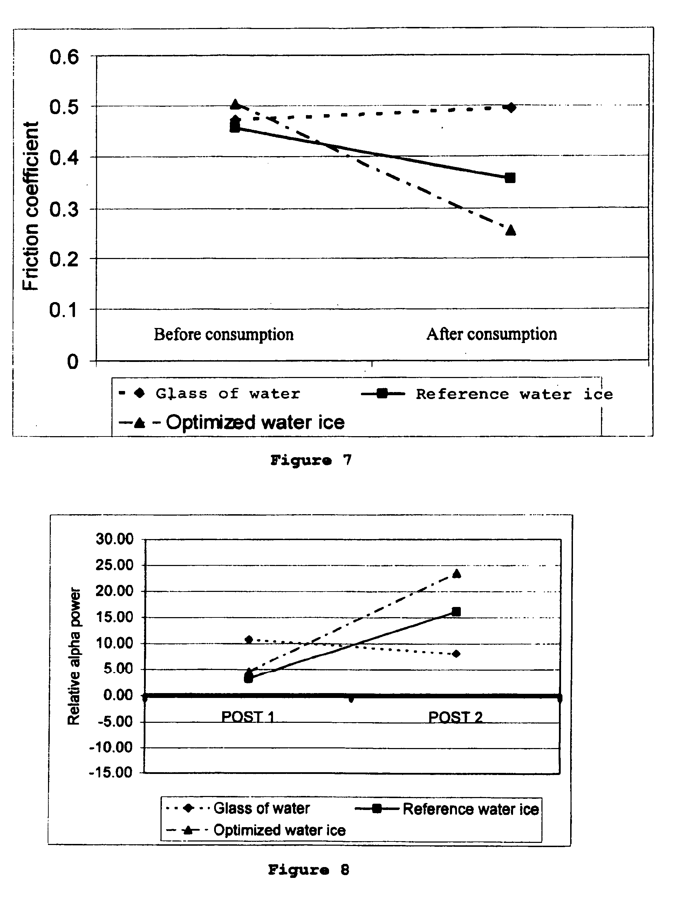

Furthermore, as shown on figure 7, it can be seen that the water ice of the present invention has the highest significant decreasing impact on the viscosity (friction coefficient). This shows that after consumption of the water ice according to the present invention, saliva is less viscous and sticky, thus improving the refreshing in mouth sensation.

Referring to figure 8, it can be seen that a water ice of the invention (optimised water ice) increases alpha activity in the 14-26 min period following consumption (POST 2). On the basis of previous published researches, it is hypothesised that alpha is involved in general alertness.

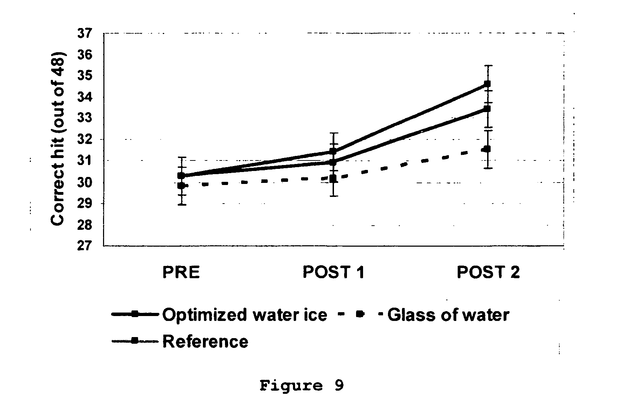

As shown by figure 9, the assumption that the optimised water-ice enhances brain activity in favour of an improvement of alertness is supported by the behavioural data. During the general enhancement of brain activity by the optimised water-ice in POST 2, performances in terms of target detection (correct hits) were 1) significantly higher after consumption of the refreshing water ice than after consumption of the glass of water; and 2) higher (not significantly but only a trend) after consumption of the refreshing water ice than after consumption of the reference water ice.

From the above physiological data, it can be concluded that the water-ice of the present invention delivered firstly immediate in-mouth refreshment and secondly a sustained positive effect on brain alertness.

In summary, the present invention provides a way in which it is possible to deliver a measurable and tangible refreshing sensation during and after consumption of a food product, in particular a frozen dessert, comparable to refreshing sensation induced by water, carbonates or juice, for example.

The present invention is further illustrated by nonlimiting examples.

### Examples

### Example 1

Nine water ice products were manufactured comprising the following amounts of cooling and salivating agent (wt%) and tested for refreshing properties:

| Trials | 1 | 2 | 3 | 4 | 5 | 6 | 7 | 8 | 9 |
|---|---|---|---|---|---|---|---|---|---|
| Cooling agent | 0 | 0 | 0 | 0.02 | 0.02 | 0.02 | 0.04 | 0.04 | 0.04 |
| Salivating agent | 0 | 0.1 | 0.3 | 0 | 0.1 | 0.3 | 0 | 0.1 | 0.3 |

Trials 9 and 6 correspond to products according to the present invention.

Figures 4 and 5 showed that trial 9 was the most refreshing thanks to a combination of a high salivating intensity and a low sweetness.

Regarding the synergistic effect of the cooling and salivating agents on salivating intensity (Fig 4), for a same level of 0.1 w% of salivating agent (trials 2, 5 and 8) the salivating intensity was enhanced by the addition of cooling agent at 0, 0.02 and 0.04 w% for the trials 2, 5 and 8 respectively.

Regarding the synergistic effect of the cooling and salivating agents on sweetness intensity (Fig 5), for a same level of 0.1 w% of salivating agent (trials 2, 5 and 8), the sweetness intensity was decrease by the addition of cooling agent at 0, 0.02 and 0.04 w% for the trials 2, 5 and 8 respectively.

### Example 2

Brain activity was monitored using electroencephalography (EEG) while participants were performing a cognitive task of rapid visual information processing. EEG was recorded before consumption of the treatment taken as a baseline value and after consumption of the treatment during 2 periods of time: POST1 (0-12 min) and POST2 (14-24 min). Immediately after consumption of the treatment (POST1), the glass of water significantly enhanced brain activity in the alpha range (8-12 Hz oscillations) compared to the two water-ices (Fig. 8). By contrast, in the 14-26 min period following consumption (POST2), alpha activity was significantly higher for the optimized water-ice compared to both the reference water-ice and the glass of water. Similar findings were obtained with the optimized water ice for brain activity in the theta (4-7 Hz) and beta (13-29 Hz) ranges. On the basis of previous published researches, it is hypothesised that theta and alpha most probably are involved in information encoding/retrieval and general alertness, respectively, whereas faster oscillatory activity (including beta) may participate in the co-ordination of multiple brain processes during information encoding and integration.

The assumption that the optimised water-ice enhances brain activity in favour of an improvement of cognitive resources is supported by the behavioural data obtained with 18 subjects (Fig. 9). Indeed the assumption that the optimised water-ice enhances brain activity in favour of an improvement of alertness is supported by the behavioural data. During the general enhancement of brain activity by the optimised water-ice in POST 2, performances in terms of target detection (correct hits) were 1) significantly higher after consumption of the refreshing water ice than after consumption of the glass of water; and 2) higher (not significantly but only a trend) after consumption of the refreshing water ice than after consumption of the reference water ice.

### Example 3

Example of water ice formulation

| **Ingredients** | **Amount (g) per 100g of Water Ice** |
|---|---|
| Stabiliser | 0.25 |
| Colouring | 0.001 |
| Sugars | 20-25 |
| Emulsifier | 0.04 |
| Water | 75-80 |
| Peach flavouring | 0.05 |
| Salivating agent | 0.3 |
| Cooling agent | 0.04 |

## Claims

1. Food product comprising at least one salivating agent and at least one cooling agent, wherein the salivating agent and cooling agent are in a weight ratio of 1:0.06 to 1:0.2, preferably 1:0.11 to 1:0.16 respectively, and wherein the salivating agent is present in an amount of 0.28 to 0.35wt% and the cooling agent is present in an amount of 0.02 to 0.045wt%.

2. Food product according to claim 1, wherein the salivating agent is selected from a mixture of compounds comprising at least one organic acid selected from the group of adipic, ascorbic, citric, fumaric, lactic, malic and tartaric acids.

3. Food product according to any of claims 1 or 2, wherein the cooling agent is selected from menthol derivative compounds, acyclic and/or cyclic carboxamides, N-substituted paramenthane carboxamides, phosphine oxides, substituted p-menthanes, menthoxypropane, alpha-keto enamine derivatives, N-substituted p-menthane carboxamide, menthyl half acid ester derivatives, cubebol etc.

4. Food product according to any of the preceding claims, which comprises a tingling agent.

5. Food product according to claim 4, wherein the tingling agent is selected from plant extracts which include extracts from pepper, onion, garlic, radish, horseradish, mustard, chilli, ginger.

6. Food product according to claim 5, wherein the tingling agent is selected from Szechuan pepper extract.

7. Food product according to any of the preceding claims, which comprises a mixture of malic and citric acid

8. Food product according to any of the preceding claims which comprises a mucoadhesive agent.

9. Food product according to any of the preceding claims wherein the mucoadhesive agent is carboxymethylcellulose

10. Food product according to any of the preceding claims, which is a frozen dessert.

11. Food product according to claim 10, wherein the frozen dessert is selected from ice cream, sorbet, mellorine, frozen yogurt, milk shake, sherbet, milk ice or water ice.

12. Food product according to any of the preceding claims, which is water ice.

13. Use of a refreshing consumable composition comprising at least one salivating agent and at least one cooling agent, wherein the salivating agent and cooling agent are in a weight ratio of 1:0.06 to 1:0.2, preferably 1:0.11 to 1:0.16 in the production of a food product wherein the salivating agent is present in an amount of from 0.28 to 0.35wt% and the cooling agent is present in an amount of from 0.02 to 0.045wt%.

14. Method for enhancing the refreshing sensation of a frozen dessert product comprising the steps of:
a. Adding to a frozen dessert preparation mix a refreshing consumable composition comprising at least one salivating agent in an amount of from 0.28 to 0.35wt% and at least one cooling agent in an amount of from 0.02 to 0.045wt%, wherein the salivating agent and cooling agent are in a weight ratio of 1:0.06 to 1:0.2, preferably 1:0.11 to 1:0.16, and
b. Processing the preparation mix obtained in step a to make a frozen dessert product.

15. Method according to claim 14, wherein the refreshing consumable composition comprises a tingling agent.

## Patentansprüche

1. Lebensmittelprodukt mit mindestens einem Speichel produzierenden Mittel und mindestens einem Kühlmittel, wobei das Speichel produzierende Mittel und das Kühlmittel in einem Gewichtsverhältnis von 1:0,06 bis 1:0,2, vorzugsweise 1:0,11 bis 1:0,16, vorliegen und wobei das Speichel produzierende Mittel in einer Menge von 0,28 bis 0,35 Gew.% vorliegt und das Kühlmittel in einer Menge von 0,02 bis 0,045 Gew.% vorliegt.

2. Lebensmittelprodukt gemäß Anspruch 1, wobei das Speichel produzierende Mittel aus einer Mischung von Verbindungen mit mindestens einer organischen Säure aus der Gruppe von Adipin-, Ascorbin-, Zitronen-, Fumar-, Milch-, Apfel- und Weinsäuren ausgewählt ist.

3. Lebensmittelprodukt gemäß einem der Ansprüche 1 oder 2, wobei das Kühlmittel aus Mentholderivatverbindungen, nicht-zyklischen und/oder zyklischen Carboxamiden, N-substituierten Paramenthan-Carboxamiden, Phosphinoxiden, substituierten p-Menthanen, Menthoxypropan, alpha-Ketonenamin-Derivaten, N-substitutiertem p-Menthancarboxamid, Menthyl-Halbestersäurederivaten, Kubebol etc. ausgewählt ist.

4. Lebensmittelprodukt gemäß einem der vorhergehenden Ansprüche, welches ein prickelndes Mittel aufweist.

5. Lebensmittelprodukt gemäß Anspruch 4, wobei das prickelnde Mittel aus Pflanzenextrakten einschließlich Extrakten aus Pfeffer, Zwiebel, Knoblauch, Rettich, Meerrettich, Senf, Chili, Ingwer ausgewählt ist.

6. Lebensmittelprodukt gemäß Anspruch 5, wobei das prickelnde Mittel aus einem Szechuanpfefferextrakt ausgewählt ist.

7. Lebensmittelprodukt gemäß einem der vorhergehenden Ansprüche, welches eine Mischung aus Apfel- und Zitronensäure aufweist.

8. Lebensmittelprodukt gemäß einem der vorhergehenden Ansprüche, welches ein mucoadhäsives Mittel umfasst.

9. Lebensmittelprodukt gemäß einem der vorhergehenden Ansprüche, wobei das mucoadhäsive Mittel aus Karboxymethylzellulose besteht.

10. Lebensmittelprodukt gemäß einem der vorhergehenden Ansprüche, welches ein gefrorenes Dessert ist.

11. Lebensmittelprodukt gemäß Anspruch 10, wobei das gefrorene Dessert aus Eiskrem, Sorbet, Mellorine, gefrorenem Yoghurt, Milchshake, Brause, Milcheis oder Wassereis ausgewählt ist.

12. Lebensmittelprodukt gemäß einem der vorhergehenden Ansprüche, welches Wassereis darstellt.

13. Verwendung einer erfrischenden, verzehrbaren Zusammensetzung mit mindestens einem Speichel produzierenden Mittel und mindestens einem Kühlmittel, wobei das Speichel produzierende Mittel und das Kühlmittel in einem Gewichtsverhältnis von 1:0,06 bis 1:0,2, vorzugsweise 1:0,11 bis 1:0,16, bei der Herstellung eines Lebensmittelproduktes vorliegen, wobei das Speichel produzierende Mittel in einer Menge von 0,28 bis 0,35 Gew.% vorliegt und das Kühlmittel in einer Menge von 0,02 bis 0,045 Gew.% vorliegt.

14. Verfahren zur Verbesserung der Erfrischungsempfindung eines gefrorenen Dessertproduktes mit folgenden Schritten:
a. Zusetzen einer erfrischenden, verzehrbaren Zusammensetzung mit mindestens einem Speichel produzierenden Mittel in einer Menge von 0,28 bis 0,35 Gew.% und mindestens einem Kühlmittel in einer Menge von 0,02 bis 0,045 Gew.% zu einer gefrorenen Dessertzubereitungsmischung, wobei das Speichel produzierende Mittel und das Kühlmittel in einem Gewichtsverhältnis von 1:0,06 bis 1:0,2 , vorzugsweise 1:0,11 bis 1:0,16, vorliegen, und
b. Verarbeiten der in dem Schritt a gewonnenen Zubereitungsmischung zur Herstellung eines gefrorenen Dessertproduktes.

15. Verfahren gemäß Anspruch 14, wobei die erfrischende, verzehrbare Zusammensetzung ein prickelndes Mittel aufweist.

## Revendications

1. Produit alimentaire, comprenant au moins un agent favorisant la production de salive, et au moins un agent de refroidissement, où l'agent favorisant la production de salive et l'agent de refroidissement présentent respectivement un rapport pondéral entre 1 : 0,06 et 1 : 0,2 et de préférence entre 1 : 0,11 et 1 : 0,16, et où l'agent favorisant la production de salive est présent dans une quantité allant de 0,28 à 0,35 pourcentage en poids et où l'agent de refroidissement est présent dans une quantité allant de 0,02 à 0,045 pourcentage en poids .

2. Produit alimentaire selon la revendication 1, où l'agent favorisant la production de salive est sélectionné parmi un mélange de composés comprenant au moins un acide organique sélectionné parmi le groupe composé de l'acide adipique, de l'acide ascorbique, de l'acide citrique, de l'acide fumarique, de l'acide lactique, de l'acide malique et de l'acide tartarique.

3. Produit alimentaire selon n'importe laquelle des revendications 1 ou 2, où l'agent de refroidissement est sélectionné des composés dérivés du menthol, des carboxamides acycliques et / ou cycliques, des carboxamides de paramenthane N-substitués, des oxydes de l'hydrogène phosphoré, des p-menthanes substitués, du menthoxypropane, des dérivés de l'alpha-cétone-énamine, du carboxamide de p-menthane N-substitué, des dérivés de l'ester du demi - acide de méthyle, du cubébol etc.

4. Produit alimentaire selon n'importe laquelle des revendications précédentes, lequel produit comprend un agent produisant une fraîcheur piquante.

5. Produit alimentaire selon la revendication 4, où l' agent produisant une fraîcheur piquante est sélectionné parmi les extraits de plantes qui comprennent des extraits de poivre, des extraits de l'oignon, des extraits de l'ail, des extraits de radis, des extraits de raifort, des extraits de moutarde, des extraits de piment rouge et des extraits de gingembre.

6. Produit alimentaire selon la revendication 5, où l' agent produisant une fraicheur piquante est sélectionné de l'extrait du poivre de Szechuan.

7. Produit alimentaire selon n'importe laquelle des revendications précédentes, lequel produit comprend un mélange de l'acide malique et de l'acide citrique.

8. Produit alimentaire selon n'importe laquelle des revendications précédentes, lequel produit comprend un agent mucoadhésif.

9. Produit alimentaire selon n'importe laquelle des revendications précédentes, où l'agent mucoadhésif est de la cellulose carboxyméthylique.

10. Produit alimentaire selon n'importe laquelle des revendications précédentes, lequel produit est un dessert glacé.

11. Produit alimentaire selon la revendication 10, où le dessert glacé est sélectionné parmi de la glace, du sorbet, de la mellorine, du yaourt glacé, du lait frappé, du sorbet, du lait glacé et de la glace à l'eau.

12. Produit alimentaire selon n'importe laquelle des revendications précédentes, où ledit produit est de la glace à l'eau.

13. Utilisation d'une composition consommable rafraîchissante comprenant au moins un agent favorisant la production de salive et au moins un agent de refroidissement où l'agent favorisant la production de salive et l'agent de refroidissement présentent respectivement un rapport pondéral entre 1 : 0,06 et 1 : 0,2 et de préférence entre 1 : 0,11 et 1 : 0,16, et où l'agent favorisant la production de salive est présent dans une quantité allant de 0,28 à 0,35 pourcentage en poids et où l'agent de refroidissement est présent dans une quantité allant de 0,02 à 0,045 pourcentage en poids .

14. Procédé destiné à augmenter la sensation de rafraîchissement d'un produit de dessert glacé comprenant les étapes suivantes :
a) Ajout d'une composition consommable rafraîchissante au mélange glacé de la préparation de dessert comprenant au moins un agent favorisant la production de salive présentant une quantité allant de 0,28 à 0,35 pourcentage en poids et au moins un agent de refroidissement présentant une quantité allant de 0,02 à 0,045 pourcentage en poids, où l'agent favorisant la production de salive et l'agent de refroidissement présentent respectivement un rapport pondéral entre 1 : 0,06 et 1 : 0,2 et de préférence entre 1 : 0,11 et 1 : 0,16, et
b) Traitement du mélange de préparation obtenu à l'étape a) pour fabriquer un produit de dessert glacé.

15. Procédé selon la revendication 4, où la composition consommable rafraîchissante comprend un agent produisant une fraîcheur piquante.
